# EUROPEAN PATENT APPLICATION

(11) **EP 3 142 241 A1**
(43) Date of publication of application: **15.03.2017**
(21) Application number: 15184669.8
(22) Date of filing: 10.09.2015
(51) Int. Cl.: H02M 7/48, H02M 7/49

(54) **CURRENT MEASUREMENT OFFSET COMPENSATION**

(71) Applicant: ABB Technology AG, 8050 Zürich (CH)
(72) Inventor: Buchmann, Beat, 5415 Nussbaumen (CH); Herold, Simon, 8910 Affoltern am Albis (CH)
(74) Representative: ABB Patent Attorneys

(57) **Abstract**

The present invention is concerned with a reduction of a DC offset in a power electronic converter output current to prevent saturation of a transformer connected to the converter. A current measurement DC offset of a low-cost current transducer is compensated online by using a DC voltage transducer signal indicative of a DC component in the converter current. This DC component is compared to the DC current measured with the low-cost current transducer and any difference is used for the compensating, or calibrating, the DC offset of the low-cost current transducer to prevent saturation of the coupling transformer. The combination of two low-cost transducers in order to replace one high-cost component avoids control stability problems and saves both on material and on commissioning cost.

## Description

### FIELD OF THE INVENTION

The invention relates to the field of power electronic converters connected to an electric power grid via a coupling transformer. Specifically, it relates to prevention of transformer saturation from DC components in the converter output current.

### BACKGROUND OF THE INVENTION

A Modular Multilevel Converter (MMC), also known as Chain-Link Converter (CLC), comprises a plurality of converter cells, or converter sub-modules, serially connected in converter branches, or phase legs, that in turn may be arranged in a wye/star, delta, and/or direct converter topology. Each converter cell comprises, in the form of a half-bridge or full-bridge circuit, a capacitor for storing energy and power semiconductor switches such as insulated gate bipolar transistor (IGBT) devices, gate-turn-off thyristor (GTO) devices, integrated gate commutated thyristor (IGCT) devices, or MOSFETs for connecting the capacitor to the converter branch with one or two polarities. MMCs may be used in electric power transmission systems as exclusively grid-connected, ac-only Static VAR Compensators (Statcoms) and/or Flexible AC Transmission Systems (FACTS) devices for static power-factor correction as well as for voltage quality and stability purposes. A Statcom provides reactive power support to an electric power transmission network or grid to which the Statcom is connected, by producing or absorbing reactive power.

The aforementioned MMC as well as any other three or two level power electronic converter may be used in a DC-AC inverter configuration to produce a sinusoidal output voltage that is applied to a grid-coupling transformer. Because the inverter may produce an unwanted small direct voltage across the transformer in addition to the power-frequency sinusoid, DC saturation of the transformer core may occur. In particular, a DC offset as low as a few millivolts may result in saturation of a transformer with a nominal voltage of tens of thousands of volts.

Prevention of DC saturation may be achieved by measurement of the transformer secondary current, from which the DC component is extracted by analogue and/or digital filtering techniques. Measurement of the transformer secondary current is conventionally accomplished by a current transducer including insertion of a low-ohmic shunt resistor in series with the transformer secondary, or by routing the transformer secondary through a DC measurement current transducer, which may be a Hall Effect device. When using a converter current control mode for the converter, the current transducers must be capable to measure a DC component below 1 A DC in an AC current of 1000 to 2000 A. While current transducers fulfilling such requirements are very costly, less expensive current transducers suffer from a temperature-dependent current measurement DC offset of non-negligible extent.

The patent US 6577111 B1 is directed to the use of differential measurement of the transformer magnetizing current and a delta-modulation technique to provide compensation for DC saturation of the transformer core. A difference between first and second positive peak values of the magnetizing current are compared with a threshold, resulting in a fast response time devoid of filtering time delays, and immunity to DC drift in the measuring electronics.

Prevention of dc saturation may alternatively be achieved by controlling the converter DC voltage to zero by means of a DC voltage controller and a converter DC voltage transducer which must be capable to measure a DC component below 1 V DC in an AC voltage of 1000 to 35000 V. Such transducers are less expensive than the current transducers mentioned above. However, this method may introduce a coupling between the DC voltage controller and the converter current controller which leads to problems regarding stability and dynamics.

The paper by G. Buticchi et al., entitled "A new proposal to eliminate the DC current component at the point of common coupling for grid connected systems", IECON 2010 - 36th Annual Conference on IEEE Industrial Electronics Society, pages 3244 - 3249, proposes a low cost solution for an accurate detection, free from offset problems, of the DC voltage component present in the grid voltage. It addresses the problem of a very precise DC voltage sensing strategy with a high rejection ratio to the offsets usually present in the measurement chain. Sensing the DC voltage drop across the parasitic resistance of the grid means extracting a DC voltage component of the order of hundred mV from a sinusoidal signal of peak-to-peak amplitude in excess of 600 V.

### DESCRIPTION OF THE INVENTION

It is an objective of the invention to reduce a DC offset in a power electronic converter output current to prevent saturation of a transformer connected to the converter. This objective is achieved by a method of, and a converter control setup for, controlling a power converter according to the independent claims. Preferred embodiments are evident from the dependent patent claims.

According to the invention, a current measurement DC offset of a low-cost current transducer is compensated online by using a low-cost DC voltage transducer signal indicative of a DC component in the converter output current flowing in a transformer winding or in a supply line connecting the transformer winding to the converter. This DC component is compared to the DC current measured with the low-cost current transducer and any difference is used for the compensating, or calibrating, the DC offset of the low-cost current transducer. In other words, a current waveform with a high DC accuracy is obtained from a current measurement with a low DC accuracy and from a voltage measurement across a transformer winding or supply line carrying the respective DC current. The high-accuracy current is then fed back to a DC current controller of a converter or inverter in view of a minimization of the DC component to prevent saturation of the coupling transformer. The combination of two low-cost transducers in order to replace one high-cost component avoids control stability problems and saves both on material and on commissioning cost.

Specifically, a method of controlling or operating a power converter connected to a transformer via a supply or power line comprises the steps of
Measuring a current signal indicative of a current flowing in the supply line and/or in a transformer secondary winding, wherein the signal may be subject to unpredictable and non-negligible current measurement DC offset;
Measuring a voltage signal indicative of a DC component of the current in the supply line,
Producing, by an offset controller, an offset compensation signal from the voltage signal;
Controlling a DC current in the supply line based on a sum of the current signal and the offset compensation signal to compensate, or counter, a measurement DC offset or error introduced by the current transducer.

In a preferred embodiment of the invention, the step of controlling the DC current is executed by a converter current controller of the power converter controlling the power converter output current in the supply line, hence no extra or otherwise interfering controller is required.

In a preferred embodiment of the invention, the voltage signal is measured by means of a low-cost, high-accuracy DC voltage transducer with a minimum resolution of 1 mV DC in 10 kV AC. The current signal is measured by means of a low-cost, low-accuracy current transducer with a current measurement DC offset of more than 1 A DC in 1 kA AC, preferably more than 5 A DC in 1 kA AC, in particular accepting a typical current measurement maximum DC offset of 8 A DC in 1.6 kA AC.

In an advantageous variant a time constant of the offset controller is operating on a time scale of several hundred milliseconds, whereas the current controller is operating on a time scale of several milliseconds. Such time-wise separation of the controller activities avoids interaction between the two controllers, while still allowing the offset controller to keep up with any possible temperature dependence of the measurement offset.

### BRIEF DESCRIPTION OF THE DRAWINGS

The subject matter of the invention will be explained in more detail in the following text with reference to preferred exemplary embodiments which are illustrated in the attached drawings, in which:

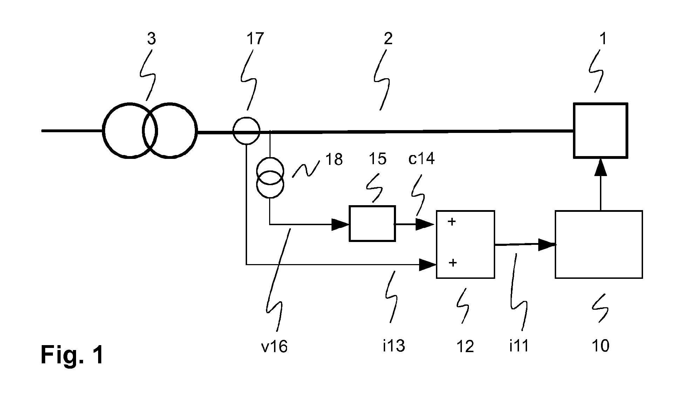

Fig.1 schematically shows a transformer-connected converter control set-up.

### DETAILED DESCRIPTION OF PREFERRED EMBODIMENTS

Fig.1 shows a converter 1 connected via a supply line 2 to a secondary side of a coupling transformer 3. A primary side of the coupling transformer may be connected to a main electric power grid via a Point of Common Coupling (PCC, not depicted). A DC component of the converter current in the supply line is controlled by means of a DC current controller or DC current control part 10 of a converter current controller of the converter 1. The DC current controller 10 receives a controller input signal i11 indicative of a converter current in the supply line. The controller input signal i11 is prepared by an offset compensator 12. The offset compensator 12 receives a low accuracy supply line current signal i13 including an unknown DC offset and an offset compensation signal c14. The offset compensation signal c14 in turn is prepared by a an offset controller 15, preferably a PI controller, based on a high accuracy DC voltage signal v16 indicative of a DC line voltage in the supply line 2 or of a DC voltage across a secondary transformer winding of the coupling transformer 3 carrying the supply line current.

The accurate DC voltage signal v16 is obtained by way of a voltage transducer 18 that is both inexpensive and sufficiently accurate to measure DC voltage components in the mV-range at µV resolution in AC-systems with an AC-voltage of up to several ten kilovolts. The voltage transducer preferably includes appropriate filters to filter out the AC parts and an AD-converter with a transducer-induced DC-offset of less than 5 µV. On the other hand, the current signal i13 is obtained by a current transducer 17 that is inexpensive and allowed to exhibit a current measurement DC offset error of several amperes, such as a closed loop current transducer using the Hall Effect. It is noted that a current transducer with a DC offset error below 1 A may be ten times more expensive than the types of low-accuracy current transducer proposed to be employed by the present invention. Exemplary PI parameters of the offset controller 15 are chosen such that the offset controller is reacting on a time scale of several 100 ms. and thus is much slower than the DC current controller 10. In other words a time constant or characteristic time of the offset controller is larger by at least a factor of 10, and preferably by at least a factor of 100, than a time constant of the current controller. Such a time-wise separation of the controller activities avoids interaction between the two controllers, while still allowing the offset controller to keep up with any possible temperature dependence of the DC measurement offset.

Assuming that the low accuracy current signal i13 from the current transducer 17 includes an exemplary DC offset error of 5 A, and absent any offset compensation signal c14, the current controller 10 is expected to control the virtual DC current to zero by imposing a small negative DC current at the converter. This small DC current is detected by voltage transducer 18 as the DC voltage v16. The offset controller 15 will produce an offset compensation or control signal c14 in order to reduce the DC voltage v16 accurately and slowly to zero in a closed loop control. In other words the offset compensation signal c14 will be controlled to compensate the DC measurement offset or virtual DC current to zero, resulting in a virtually DC free controller input signal i11.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method of controlling a power converter (1) connected to a transformer (3) via a supply line (2), comprising
- measuring a current signal (i13) indicative of a current in the supply line;
- measuring a voltage signal (v16) indicative of a DC component of the current in the supply line,
- producing, by an offset controller (15), an offset compensation signal (c14) from the voltage signal; and
- controlling a DC current in the supply line based on the current signal and the offset compensation signal.

2. The method of claim 1, wherein the step of controlling the DC current is executed by a converter current controller of the power converter.

3. The method of claim 1, comprising
- measuring the voltage signal by means of a DC voltage transducer (18) with a resolution of 1 mV DC in 10 kV AC or better; and/or
- measuring the current signal by means of a current transducer (17) with a current measurement DC offset of more than 1 A DC in 1 kA AC, preferably more than 5 A DC in 1 kA AC.

4. The method of claim 1, wherein a time constant of the offset controller is larger than a time constant of the current controller by a factor of ten or more.

5. The method of any of claims 1 to 4, wherein the power converter is a Modular Multilevel Converter MMC Statcom for static power-factor correction.

6. A converter control setup for controlling a power converter (1) connected to a transformer (3) via a supply line (2), comprising
- an offset controller (15) for producing an offset compensation signal (c14) from a voltage signal (v16) indicative of a DC component of a current in the supply line; and
- a current controller (10) for controlling a DC current in the supply line based on the offset compensation signal and a current signal (i13) indicative of a current in the supply line.
